# EUROPEAN PATENT SPECIFICATION

(11) **EP 4 544 902 B1**
(45) Date of publication and mention of the grant of the patent: **09.12.2026**
(21) Application number: 24199735.2
(22) Date of filing: 11.09.2024
(51) Int. Cl.: A01F 15/08, G06N 20/00, G06T 7/00, G06V 20/00

(54) **GENERATING INFORMATION ABOUT BALED PLANT MATERIAL**
ERZEUGUNG VON INFORMATIONEN ÜBER IN BALLENFORM GEBRACHTES PFLANZENMATERIAL
GÉNÉRATION D'INFORMATIONS CONCERNANT UN MATÉRIAU VÉGÉTAL EN BALLES

(30) Priority: 23.10.2023 US 202363592234 P
(43) Date of publication of application: 30.04.2025
(73) Proprietor: Agco Corporation, Duluth, Georgia 30096 (US)
(72) Inventor: BEER, Benjamin Michael, Jackson, 56143 (US)
(74) Representative: AGCO Intellectual Property Department

(56) References cited:
- EP-A1- 4 124 237
- US-A1- 2021 116 361

## Description

### FIELD

Embodiments of the present disclosure generally relate to the field of harvesting machinery.

### BACKGROUND

With ever-increasing population numbers and ongoing interest in more environmentally friendly farming practices, there is an increasing desire to improve the quality and quantity of harvested crop or plant material.

Baling is an increasingly important part of agricultural practice. Baling machinery will gather and compress plant material in the form of a bale. More particularly, baling machinery will bale portions of plant material together to form or produce a bale.

A "rectangular bale" (having a cuboidal shape) is typically formed by iteratively gathering a portion of plant material and compressing the gathered portion of plant material to form a bale. Each iteration effectively produces a flake or layer of plant material for the bale. The accumulation of multiple flakes over multiple iterations produces a stack of layers of plant material forming the rectangular bale.

A "round bale" or "rolled bale" is formed by continually gathering portions of plant material and wrapping or rolling the gathered portions.

Any suitable form of plant material may be baled, including any crop material or other herbaceous plant material (such as hay, cotton or silage). A wide variety of plant material suitable for baling will be readily apparent to the skilled person.

There is an ongoing demand to increase the amount of information known about baled plant material. This facilitates and informs improves agricultural practice, e.g., whether any treatments should be applied to baled hay to achieve desired properties for the baled plant material.

Balers are e.g. known from the following documents: US 2021/116361 A1 and EP 4 124 237 A1.

### BRIEF SUMMARY

The invention is defined by the claims.

According to the invention, there is provided a computer-implemented method for predicting a property of baled plant material produced by baling machinery configured to bale plant material present in a baling chamber.

The computer-implemented method comprises: obtaining, from a sensor positioned in the baling chamber, sensor data that changes responsive to a change in the property of plant material present in the baling chamber; and processing the sensor data, using a machine-learning algorithm, to predict one or more values of the property of the baled plant material produced by baling the plant material present in the baling chamber.

The present disclosure proposes the use of a machine-learning algorithm to predict information about baled plant material that processes sensor data produced by a sensor in a baling chamber. The sensor data is responsive to changes in one or more properties of plant material in the baling chamber - i.e., plant material to be baled or plant material after being baled.

The present disclosure recognizes that a machine-learning algorithm is capable of accurately predicting information about baled plant material by processing such sensor data. Significantly improved accuracy in determining one or more characteristics of the baled plant material, or a portion thereof, is thereby achieved.

The sensor data may comprise image data. It is recognized that image data advantageously provides or indicates a wide variety of information about plant material, and that a machine-learning algorithm is particularly suited to the processing of image data. The proposed approach thereby facilitates the accurate prediction of one or more properties of the plant material.

The property of the baled plant material may comprise a ratio of stem to leaves in the plant material. This provides useful information about the content of the baled plant material, particularly the nutritional content of the baled plant material.

According to the invention, the baling machinery is configured to bale a plurality of portions of plant material to form the baled plant material; the sensor data comprises a portion of sensor data for each portion of plant material; and processing the sensor data comprises processing each portion of sensor data to predict a value for the property of each portion of plant material.

Thus, a respective value may be generated for each of a plurality of portion of plant material that form the baled plant material. In this way, a plurality of values for the property are generated that effectively represent the distribution of the value of the property throughout the baled plant material. This advantageously provides more granular information about the content of the baled plant material. This allows an individual to identify different parts of the baled plant material that may be useful for different scenarios or uses - rather than needing to rely upon a single value for the entirety of the baled plant material.

The method further comprises constructing a model of the baled plant material using the predicted property of each portion of plant material. The model is a 3D model of the baled plant material that represents or depicts the baled plant material and the distribution of the value of the property throughout the baled plant material.

In some examples, the sensor data is obtained prior to the baling of the plant material present in the baling chamber. This facilitates faster and more dynamic prediction of the value(s) of the property.

In other examples, the sensor data is obtained after the baling of the plant material present in the baling chamber.

In some examples, the method further comprises comprising tagging the baled plant material with a bale-specific tag for identifying the bale.

In some examples, the method further comprises uploading the predicted one or more values of the property of the baled plant material to an external server, wherein the bale-specific tag indicates a location of the uploaded predicted one or more values of the property of the baled plant material on the external server.

In some examples, the bale-specific tag comprises a QR code.

The computer-implemented method may comprise comprising displaying the predicted one or more values of the property.

The computer-implemented method may further comprise checking an external update server for any updates for the machine-learning algorithm; and responsive to the presence of an update for the machine-learning algorithm, downloading the update from the external server and updating the machine-learning algorithm using the update.

There is also proposed a processing system for predicting a property of baled plant material produced by baling machinery configured to bale plant material present in a baling chamber. The processing system is configured to: obtain, from a sensor positioned in the baling chamber, sensor data that changes responsive to a change in the property of plant material present in the baling chamber; and process the sensor data, using a machine-learning algorithm, to predict one or more values for a property of the baled plant material produced by baling the plant material present in the baling chamber.

There is also proposed a baling system comprising: the processing system;
the baling machinery; and the sensor positioned in the baling chamber of the baling machinery.

These and other aspects of the invention will be apparent from and elucidated with reference to the embodiment(s) described hereinafter.

### BRIEF DESCRIPTION OF THE DRAWINGS

One or more embodiments of the invention / disclosure will now be described, by way of example only, with reference to the accompanying drawings, in which:
FIG. 1 illustrates an agricultural baler system;
FIG. 2 illustrates first baling machinery;
FIG. 3 illustrates second baling machinery;
FIG. 4 illustrates a proposed method;
FIG. 5 illustrates a further proposed method;
FIG. 6 illustrates optional steps for a proposed method;
FIG. 7 illustrates optional steps;
FIG. 8 illustrates optional steps; and
FIG. 9 illustrates a system.

### DETAILED DESCRIPTION

The invention will be described with reference to the figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the figures are merely schematic and are not drawn to scale. It should also be understood that the same reference numerals are used throughout the figures to indicate the same or similar parts.

The invention provides a mechanism for predicting one or more values for a property of a bale. A camera, positioned in a baling chamber of baling machinery, generates sensor data. The sensor data is processed using a machine-learning method to predict the one or more values.

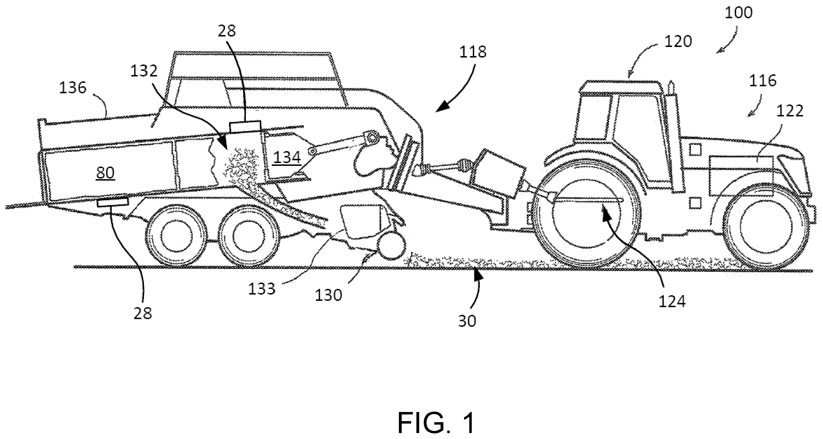

FIG. 1 conceptually illustrates an agricultural baler system 100 for improved contextual understanding. The illustrated agricultural baler system 100 is illustrated during the process of baling plant material 30 (e.g., a windrow, swath or other crop material) from the ground into bales 80, i.e., to form baled plant material.

The agricultural baler system 100 includes a towing vehicle 116 and baling machinery 118 (which can be simply labelled a "baler"). The towing vehicle 116 may include a cab 120 in which an operator may be located, an engine 122 operable to move the towing vehicle 116, and a power take-off (PTO) 124 operable to transfer mechanical power from the engine 122 to the baling machinery 118. The towing vehicle 116 may, for instance, be a tractor or other form of agricultural vehicle.

The illustrated first baling machinery 118 is a "rectangular baler" configured to produce rectangular bales.

However, the skilled person will appreciate that, in the context of the present disclosure, the baling machinery 118 is merely illustrative, and that other types of baling devices may be used to form the crop material 30 into bales 80. Examples include round balers as described in U.S. Patent 8,291,687, "Continuous Round Baler," granted October 23, 2012; and U.S. Patent 8,833,247, "Giant Round Baler Compressor," granted September 16, 2014.

The baling machinery 118 as shown has a fore-and-aft extending baling chamber 132, within which the bales 80 of plant material 30 are prepared. The baling machinery 118 is depicted as an "in-line" type of baler, wherein portions of plant material 30 is picked up below and slightly ahead of the baling chamber 132 and then loaded up into the bottom of chamber 132 in a straight line path of travel. A pickup assembly 130 collects the plant material 30 and passes it to a stuffer chute assembly 133. The stuffer chute assembly 133 may extend generally rearward and upward from an inlet opening just behind the pickup assembly 130 to an outlet opening at the bottom of the baling chamber 132. In the particular illustrated embodiment, the baling machinery 118 is an "extrusion" type baler in which the bale discharge orifice at the rear of the baling machinery is generally smaller than upstream portions of the chamber, such that the orifice restricts the freedom of movement of a previous portion and provides back pressure against which a reciprocating plunger 134 within the baling chamber 132 can act to compress portions of plant material 30 into the next bale. The dimensions of the discharge orifice and the squeeze pressure on the bales at the orifice are controlled by a compression mechanism.

The plunger 134 reciprocates within the baling chamber 132 in compression and retraction strokes across the opening at the bottom of the baling chamber 132. The reciprocating plunger 134 presses portions of the plant material 30 against a previously formed and tied bale 80 to form a new bale. This action also causes both bales to intermittently advance toward a rear discharge opening of the baling machinery. The completed bales 80 are tied with binding material or a similar twine. Once tied, the bales are discharged from the rear end of the bale-forming chamber 132 onto a discharge in the form of a chute, generally designated 136.

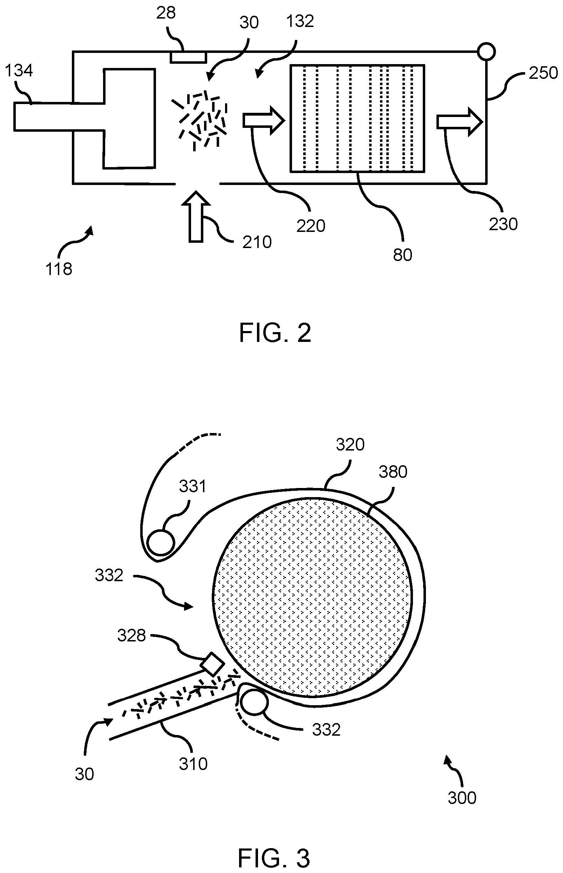

FIG. 2 is a simplified diagram of the baling machinery 118 for improved understanding.

The baling machinery 118 comprises or defines a baling chamber 132. A portion of plant material 30 is moved into the baling chamber 132, as indicated by a first arrow 210. The portion of plant material 30 is compressed, as indicated by a second arrow 220, to a stack of plant material, thereby forming a layer (also known as a flake) of the stack of plant material. As portions of plant material 30 are repeated moved into the baling chamber 132 and compressed, the stack of plant material grows to form the bale. Each compression forms a layer or flake of the bale (conceptually illustrated with dotted lines). When a bale reaches a certain size or position, it is discharged, as indicated by a third arrow 230, out of the bale discharge orifice 250, illustrated as a hinged element.

Thus, the baling machinery is configured to bale a plurality of portions of plant material to form baled plant material, i.e., a bale.

FIG. 3 is a simplified diagram of a portion of alternative baling machinery 300 for improved understanding.

The baling machinery 300 is a round baler, configured to produce round bales. Portions of plant material 30 are transported to a baling chamber 332, e.g., via a transportation chute 310. The plant material may be transported from a hopper or other reservoir (e.g., for baling cotton) or directly from a ground surface (e.g., for baling hay). One or more belts 320 in the baling chamber roll the plant material to form a round bale 380. The operation of the one or more belts maybe controlled by, for instance, one or more drive rollers 331, 332. The rollers may be driven hydraulically, electrically, or mechanically. Tension rollers (not illustrated) may apply tension to the belt, e.g., to ensure that a round bale 380 is formed. When the bale reaches a certain size, the bale may be expelled from the baling chamber.

With reference to FIGS. 2 and 3, further elements for either example of baling machinery 300 may be present, but are not illustrated or described in detail for the sake of clarity. These further elements may include compression elements, bale size monitoring elements, bale movement elements, bale expulsion elements, bale transportation element, roller driving elements or motors, bale tying or wrapping elements, and so on.

The above-described examples merely serve to demonstrate how different forms and embodiments of baling machinery are able to bale portions of plant material. Generally, baling machinery will comprise a baling chamber in which portions of plant material are baled to form baled plant material (i.e., a bale).

The present disclosure proposes to position a sensor in the baling chamber. Sensor data produced by the sensor is processed (e.g., by a processing system) using a machine-learning method in order to predict (the value of) one or more properties of the baled plant material.

FIGS. 1 and 2 illustrate one example of a sensor 28 positioned within a baling chamber 132. FIG. 3 illustrates another example of a sensor 328 positioned within a baling chamber 332.

Sensor data produced by the sensor may be passed to a processing system (not illustrated) for processing.

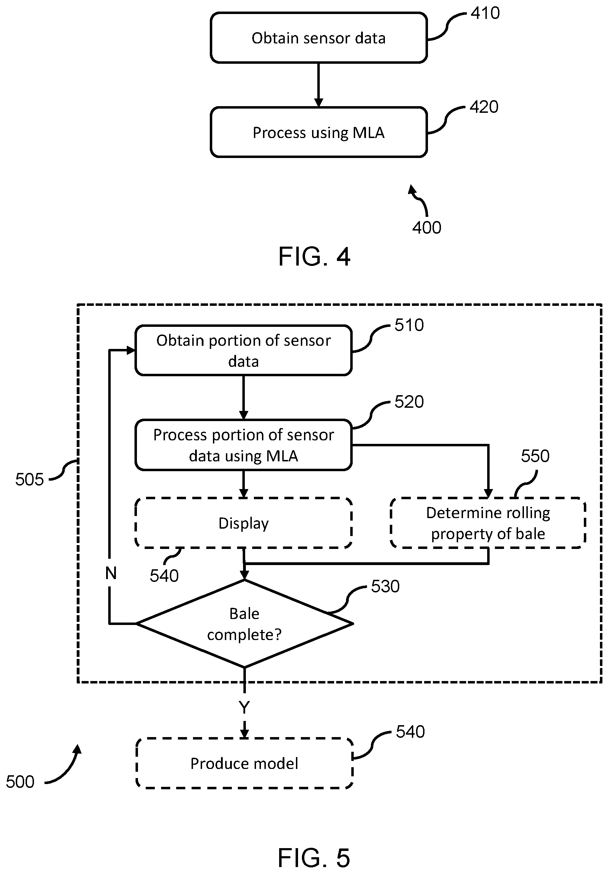

FIG. 4 is a flowchart illustrating a computer-implemented method 400 for predicting one or more values for a property (or properties) of baled plant material produced by baling machinery. The baling machinery is configured to bale plant material present in a baling chamber. The computer-implemented method 400 may be carried out by a processing system.

The computer-implemented method comprises a step 410 of obtaining, from a sensor positioned in the baling chamber, sensor data that changes responsive to a change in the property of plant material present in the baling chamber.

The computer-implemented method also comprises a step 420 of processing the sensor data, using a machine-learning algorithm (MLA), to predict the value(s) for/of a property of the baled plant material produced by baling the plant material present in the baling chamber.

In some examples, step 420 comprises predicting the value(s) of a plurality of properties of the baled plant material. Different machine-learning algorithms may be employed for predicting the value(s) for different properties, each machine-learning algorithm being appropriately trained to process sensor data to predict the value(s) for a respective, different property.

Embodiments therefore make use of one or more machine-learning algorithms. Any suitable machine-learning algorithm may be used in different embodiments for the present disclosure. Suitable machine-learning algorithms include (artificial) neural networks, support vector machines (SVMs), Naïve Bayesian models and decision tree algorithms, although other appropriate examples will be apparent to the skilled person.

There are a number of well-established approaches for training a machine-learning algorithm. Typically, such training approaches make use of a large database of known input and output data. The machine-learning algorithm is modified until an error between predicted output data, obtained by processing the input data with the machine-learning algorithm, and the actual (known) output data is close to zero, i.e., until the predicted output data and the known output data converge. The value of this error is often defined by a cost function. The precise mechanism for modifying the machine-learning algorithm depends upon the type of model. Example approaches for use with a neural network include gradient descent, backpropagation algorithms and so on.

For use in the above-described approach, the known input data comprises sensor data. The corresponding known output data comprises, for each instance of sensor data, a value or values for the property of baled plant material.

The skilled person will appreciate how different forms of known input and output data can be used dependent upon the function or purpose of the machine-learning algorithm.

A wide variety of potential forms of sensor data (and therefore sensors) and properties for the baled plant material are envisaged by the present disclosure. The shared underlying principle is the recognition that there is an advantage to processing sensor data using a machine-learning algorithm to predict the value(s) of the property/properties of the baled plant material.

In a preferred example, the sensor data comprises image data of at least a portion of plant material. Accordingly, the sensor may be a camera configured to capture image data. The camera may be configured to capture an image of the portion of plant material before baling and/or after baling (e.g., after being formed as a part of the baled plant material). Image data is particularly suited for being processed by a machine-learning algorithm, due to the large amount of difficult to interpret information contained in image data.

The image data may, for instance, be responsive to (only) visible light and/or (only) infrared light. Thus, the image data may be visible image data or infrared image data. Suitable cameras for capturing such data will be readily apparent to the skilled person.

One example property of the plant material is a nutritional content of the baled plant material.

A suitable example of nutritional content is a ratio of stem to leaves in the plant material. The ratio of stem to leaves provides important information for subsequent use of the bale (e.g., for feed or bedding), and thereby provides additional information that aids a farmer or agricultural worker in performing their tasks. An image of plant material can be appropriately processed by a machine-learning algorithm to predict the value of such a property.

Another example of nutritional content is a measure of (e.g., average) leaf and/or stem width and/or height in the plant material. This information provides useful information on a growth of the plant material, and thereby the nutritional content of the plant material. An image of plant material can be appropriately processed by a machine-learning algorithm to predict the value of such a property.

Another example property of the plant material is a density of the baled plant material. An image of the plant material may be processed to accurately determine or predict the density of the baled plant material.

Another example property of the plant material is a moisture content of the baled plant material. The appearance of plant material may change responsive to a moisture content of the plant material, such that an image of the plant material may be processed to accurately determine or predict the water content of the baled plant material.

Other suitable example properties will be apparent to the skilled person.

As another working example, the sensor data may comprise moisture data produced by a moisture sensor. The machine-learning algorithm may be trained to predict a value for a property, such as a nutritional content, by processing moisture data. Thus, the property of the plant material may be a nutritional content of the plant material.

The sensor data may be obtained prior to the baling of the plant material present in the baling chamber. Thus, sensor data may be generated for the raw plant material that enters the baling chamber before it is baled to form part of the bale, i.e., before it forms part of the bale.

In other examples, the sensor data is obtained after the baling of the plant material present in the baling chamber. Thus, sensor data may be generated for plant material after it forms part of the bale.

FIG. 5 is a flowchart illustrating a variant computer-implemented method 500 for predicting one or more values for a property of baled plant material produced by baling machinery. The computer-implemented method 500 may be carried out by a processing system. In particular, the processing system may be carried by the baling machinery or the towing vehicle for the baling machinery.

In this method 500, the sensor data comprises a portion of sensor data for each of a plurality of portions of plant material. As previously explained, when baling plant material, a plurality of portions of plant material are baled together to form the baled plant material. Thus, each portion of plant material may represent a sub-unit or flake of the baled plant material.

The method 500 is adapted to process each portion of sensor data, using the machine-learning algorithm, to predict a value for the property of each portion of plant material. Thus, a value for the property of the baled plant material (e.g., ratio of stem-to-leaves) may be predicted for each portion of the plant material (e.g., a ratio of stem-to-leaves in each portion may be predicted).

Thus, the method 500 comprises an iterative process 505.

The iterative process 505 comprises a step 510 of obtaining a portion of sensor data. The portion of sensor data represents an instance of sensor data (e.g., an image) generated by the sensor for a portion of plant material (which is to form part of the bale).

Each portion of plant material may comprise a discrete portion of plant material (e.g., a portion of plant material that is compressed by a reciprocating plunger of a rectangular baler) or a sample of plant material in a stream of plant material (e.g., a portion of plant material that is formed into a round bale for a round baler).

The iterative process 505 also comprises a step 520 of processing the portion of sensor data using the machine-learning algorithm to predict a value for a property of the portion of plant material. Approaches for processing sensor data have been previously disclosed, and can be readily adapted for use in predicting the value(s) for a portion of the plant material.

The iterative process 505 may be repeated, for instance, at least until the bale is complete. Thus, the method may comprise a step 530 of determining whether or not an indicator of completion has been generated. This indicator may, for instance, be automatically generated when the bale is ejected from the baling machinery and/or by another sensor of the baling machinery that is triggered (e.g., when the bale is tied up by the baling machinery).

After the iterative process 505 is complete, the value(s) of the property/properties of a plurality of portions of plant material may be further processed to determine a property of the overall bale of plant material. For instance, for each property, the predicted values of the determined portions may be averaged to produce a single value of the property for the entire bale or entirety of the baled plant material.

In some examples, the method 500 comprises a step 540 of constructing a model of the baled plant material using the predicted value of the property of each portion of plant material. Thus, a property-based model of the baled plant material can be produced. The property-based model may, for instance, identify or indicate a distribution of the value(s) of the property (e.g., nutritional content) throughout the baled plant material, i.e., the bale.

More particularly, the step 540 may comprise constructing a 3D model of the baled plant material. The general structure and shape of the baled plant material will be known or predetermined (as a result of the consistency of the baling machinery). The 3D model may indicate, throughout the 3D model, the value of the property predicted by the machine-learning algorithm throughout the bale. In particular, each portion of the 3D model representing a corresponding portion of the plant material may be associated with the value of the predicted property for the portion of the plant material. This provides useful information about the distribution and value of a particular property throughout the bale.

Thus, rather than providing a single value for the entire bale, the method is able to provide values for the property throughout the bale.

In some examples, the iterative process may comprise a step 540 of controlling a user interface to provide a visual representation of the determined value(s) of the property of the portion of plant material. The user interface may be positioned for an operator of the baling machinery to view (e.g., in the cab of a towing vehicle for the baler). This provides the operator with useful information to check or monitor the progress of the baling procedure, e.g., to check that the portions of plant material have desirable properties.

The iterative process may comprise further processing and/or analysis steps using the determined value of the property of the portion of plant material. In some examples, the iterative process may comprise controlling one or more controllable elements responsive to the determined value of the property of the portion of plant material. Purely by way of example, the method may comprise controlling chemical dispersion apparatus to disperse one or more chemicals responsive to the determined value(s) of the property of the portion of plant material failing to meet one or more desired conditions.

In some examples, the iterative process may comprise a step 550 of determining or predicting a value(s) property of the baled plant material using the determined properties of all portions of plant material determined in previous iterations. Thus, step 550 may effectively comprise determining a rolling value of the property of the baled plant material (e.g., a rolling average of the property, e.g., a rolling average of a nutritional content).

Step 550 may therefore comprise updating a previously determined (rolling) value for a property of the bale using the most recently predicted value for said property of a portion of plant material for the bale. This facilitates live and automatically up-to-date information about the bale to be generated whilst the bale is being produced. Information generated in step 550 may, for instance, be displayed, be further processed and/or used to control one or more controllable elements.

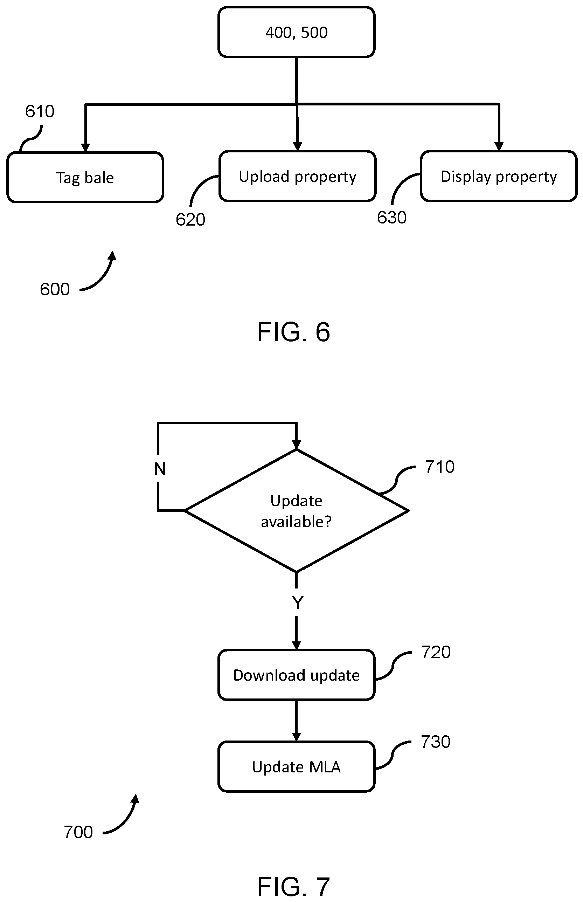

FIG. 6 is a flowchart that illustrates further optional steps that may be performed by a proposed computer-implemented method, in particular after performing any previously described method 400, 500.

One optional step 610 comprises tagging the baled plant material with a bale-specific tag for identifying the bale. The tagging may comprise a physical tagging, i.e., a securing of a physical, bale-specific tag to the bale for identifying the bale. The bale-specific tag may provide information that facilitates identification of the bale, e.g., a near-unique number or other identifying information.

Another optional step 620 comprises uploading the predicted value(s) of the property of the baled plant material to an external server. This may comprise, for instance, storing the predicted value(s) of the property in a cloud-based storage unit or memory.

In examples in which both steps 610 and 620 are performed, then the bale-specific tag may identify or indicate a location of the uploaded predicted value(s) of the property of the baled plant material. The location may, for instance, be a location where a copy of the uploaded predicted value(s) is available for viewing, such as a website address. This may, for instance, comprise a pointer or link to the predicted value(s) of the property. The bale-specific tag may, for instance, comprise a QR code or similar that identifies or indicates the location (e.g., website address) of the uploaded information or a copy thereof. This can, for instance, allow an operator or viewer of the bale to view or see information about the baled plant material.

Another optional step 630 comprises displaying the predicted value(s) of the property of the baled plant material. Thus, step 630 comprises controlling a user interface to provide a visual representation of the predicted value(s) of the property of the baled plant material.

FIG. 7 is a flowchart 700 illustrating further optional steps that may be performed by proposed methods. As before, the steps of the method are performed by a processing system.

In some examples, the method further comprises a step 710 of checking an external update server for any updates for the machine-learning algorithm. This can be performed by performing an active check of the external update server (e.g., attempting to pull an update) and/or responding to a communication from the external update server (e.g., waiting for the external update server to push an update to the processing system.

Step 710 may be performed at periodic intervals, e.g., once an hour, once a day, once a month and so on. In preferred embodiments, step 710 is performed only when the processing system (and/or baling machinery and/or towing vehicle) is idle - e.g., not being actively used. This prevents an update from occurring during use of the processing system.

The method may further comprise, responsive to the presence of an update for the machine-learning algorithm, a step 720 of downloading the update from the external server and a step 730 of updating the machine-learning algorithm (MLA) using the update.

The update may, for instance, comprise a complete replacement machine-learning algorithm for predicting the value(s) of the property of the baled material. In other examples, the update may comprise one or more replacement (values for) parameters of a machine-learning algorithm, e.g., one or more replacement weights for the machine-learning algorithm. Other data formats and content for information capable of updating a machine-learning algorithm will be readily apparent to the skilled person.

Thus, the processing system that performs the method(s) is able to function entirely offline in processing the sensor data to predict the value(s) of the property of the baled plant material. However, the processing system may also include a gateway to allow it to retrieve or obtain the most up-to-date machine-learning algorithm. In this way, the machine-learning algorithm can be trained elsewhere (e.g., in the cloud), and the latest parameters can just be sent to the (local) processing system. This ensures that the processing system has the most up-to-date machine-learning algorithm without itself needing to retrain the model.

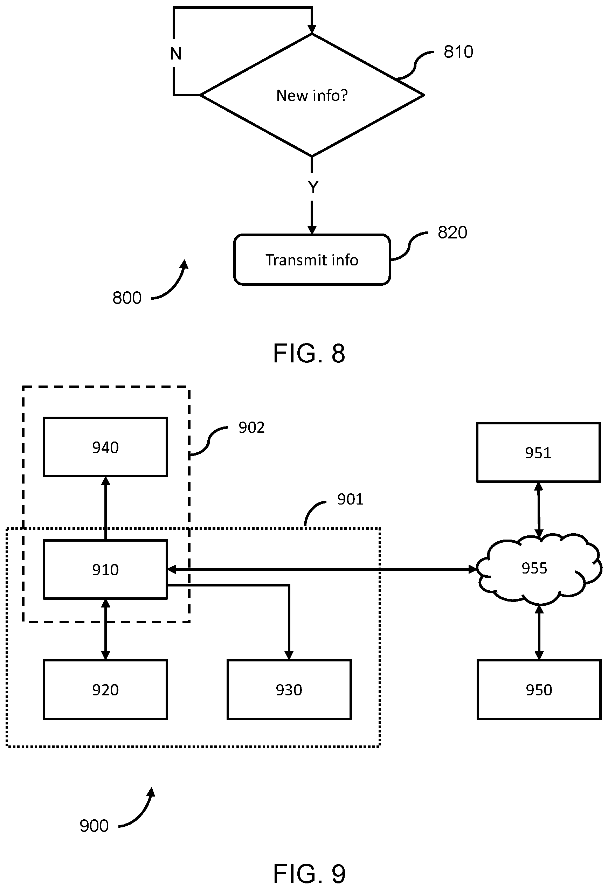

FIG. 8 is a flowchart 800 illustrating further optional steps that may be performed by proposed methods. As before, the steps of the method are performed by a processing system.

In some examples, the method comprises a step 810 of checking or determining whether or not there is information for use in updating the machine-learning algorithm. This information may, for instance, comprise one or more parameter values of an adjusted machine-learning algorithm (e.g., if the machine-learning algorithm is a reinforcement learning algorithm) and/or correction information (e.g., identifying incorrect predictions by the machine-learning algorithm, e.g., comprising information indicating a correct prediction and the sensor data that made the incorrect prediction(s)). The correction information may, for instance, be generated by an operator of the baling machinery and/or towing vehicle, e.g., interacting with a user interface.

Responsive to a positive determination in step 810, a step 820 of transmitting the information to the external update server - e.g., for updating or retraining the machine-learning algorithm.

FIG. 9 conceptually illustrates elements of a system 900 in which embodiments may be integrated. In particular, the system may comprise a processing system 910, a sensor 920, a (optional) tagger 930, a (optional) user interface 940; an (optional) external server 950; and an (optional) external update server 951.

The processing system 910 is configured to perform any previously disclosed method. In particular, the processing system may perform the steps of obtaining, from a sensor positioned in the baling chamber, sensor data that changes responsive to a change in the property of plant material present in the baling chamber; and processing the sensor data, using a machine-learning algorithm, to predict one or more values for the property of the baled plant material produced by baling the plant material present in the baling chamber.

At least the step of processing the sensor data is performed by the processing system. The processing system 910 is carried by the baling machinery 901 and/or the towing vehicle 902 (i.e., an agricultural vehicle). This is conceptually illustrated using a dotted box (representing the baling machinery) and a dashed box (representing the towing vehicle).

Thus, the processing system may comprise a local store or version of the machine-learning algorithm which is used to process the sensor data to predict value(s) for the property of the baled plant material.

The sensor 920 is carried by the baling machinery 901. More specifically, as previously explained, the sensor is positioned within the baling chamber of the baling machinery.

The tagger 930 is controlled by the processing system 910 to performing tagging of the baled plant material with a bale-specific tag for identifying the bale. Approaches and techniques for applying a tag to a bale are known in the art.

The user interface 940 is configured to provide a display to an operator of the towing vehicle and/or the baling machinery. The processing system 910 may be configured to control the user interface 940 to provide a visual representation of any property determined by the processing system. Appropriate schemes, techniques and protocols for controlling a user interface to provide visual representation are well established in the art.

The external server 950 is configured to store the (value of) any property predicted by the processing system 910. In particular, the processing system may communicate with the external server 950 (e.g., via the internet 955 or other communication protocol/medium/channel) to store any predicted (value of) any property. The external server 950 may make information about where the property is stored available to the processing system, e.g., to facilitate the tagging of the baled plant material with an identifier of the location of the stored property.

The external update server 951 is configured to provide updates for the machine-learning algorithm employed by the processing system 910. In some examples, the processing system 910 may be configured to provide information to the external update server for updating or training the machine-learning algorithm. The processing system 910 and external update server 951 may, for instance, communicate over the internet 955.

The skilled person would be readily capable of developing a processing system for carrying out any herein described method. Thus, each step of the flow chart may represent a different action performed by a processing system, and may be performed by a respective module of the processing system.

It will be understood that disclosed methods are preferably computer-implemented methods. As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method.

A computer program may be stored on a computer-readable medium, itself an embodiment of the invention. A "computer-readable medium" is any suitable mechanism or format that can store a program for later processing by a processing unit. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

## Claims

1. A computer-implemented method for predicting a property of baled plant material produced by baling machinery configured to bale plant material present in a baling chamber, the computer-implemented method comprising:
obtaining, from a sensor positioned in the baling chamber, sensor data that changes responsive to a change in the property of plant material present in the baling chamber; and
processing the sensor data, using a machine-learning algorithm, to predict one or more values for the property of the baled plant material produced by baling the plant material present in the baling chamber;
wherein:
the baling machinery is configured to bale a plurality of portions of plant material to form the baled plant material;
the sensor data comprises a portion of sensor data for each portion of plant material; and
processing the sensor data comprises processing each portion of sensor data to predict a value for the property of each portion of plant material;
the method further comprising constructing a 3D model of the baled plant material using the predicted property of each portion of plant material, the 3D model representing the baled plant material and the distribution of the value of the property throughout the baled plant material.

2. The computer-implemented method of claim 1, wherein the sensor data comprises image data.

3. The computer-implemented method of claim 2, wherein the property of the baled plant material comprises a ratio of stem to leaves in the baled plant material.

4. The computer-implemented method of any of claims 1 to 3, wherein the sensor data is obtained prior to the baling of the plant material present in the baling chamber.

5. The computer-implemented method of any of claims 1 to 3, wherein the sensor data is obtained after the baling of the plant material present in the baling chamber.

6. The computer-implemented method of any of claims 1 to 5, further comprising tagging the baled plant material with a bale-specific tag for identifying the bale.

7. The computer-implemented method of claim 6, further comprising uploading the predicted one or more values of the property of the baled plant material to an external server,
wherein the bale-specific tag indicates a location of the uploaded predicted one or more values of the property of the baled plant material on the external server.

8. The computer-implemented method of any of claims 6 or 7, wherein the bale-specific tag comprises a QR code.

9. The computer-implemented method of any of claims 1 to 8, further comprising displaying the predicted one or more values of the property

10. The computer-implemented method of any of claims 1 to 8, further comprising:
checking an external update server for any updates for the machine-learning algorithm; and
responsive to the presence of an update for the machine-learning algorithm, downloading the update from the external server and updating the machine-learning algorithm using the update.

11. A processing system for predicting a property of baled plant material produced by baling machinery configured to bale plant material present in a baling chamber, the processing system being configured to:
obtain, from a sensor positioned in the baling chamber, sensor data that changes responsive to a change in the property of plant material present in the baling chamber; and
process the sensor data, using a machine-learning algorithm, to predict one or more values for a property of the baled plant material produced by baling the plant material present in the baling chamber;
wherein:
the baling machinery is configured to bale a plurality of portions of plant material to form the baled plant material;
the sensor data comprises a portion of sensor data for each portion of plant material; and
processing the sensor data comprises processing each portion of sensor data to predict a value for the property of each portion of plant material;
the processing system being further configured to construct a 3D model of the baled plant material using the predicted property of each portion of plant material, the 3D model representing the baled plant material and the distribution of the value of the property throughout the baled plant material.

12. A baling system comprising:
the processing system of claim 11;
baling machinery; and
a sensor positioned in a baling chamber of the baling machinery.

## Patentansprüche

1. Computerimplementiertes Verfahren zum Vorhersagen einer Eigenschaft von durch Ballenpressmaschinen in Ballenform gebrachtem Pflanzenmaterial, das dazu ausgelegt ist, in einer Ballenpresskammer vorhandenes Pflanzenmaterial in Ballenform zu bringen, wobei das computerimplementierte Verfahren Folgendes umfasst:
Erhalten, von einem Sensor, der in der Ballenpresskammer positioniert ist, von Sensordaten, die sich als Reaktion auf eine Änderung der Eigenschaft von Pflanzenmaterial, das in der Ballenpresskammer vorhanden ist, ändern; und
Verarbeiten der Sensordaten unter Verwendung eines Maschinenlernalgorithmus, um einen oder mehrere Werte für die Eigenschaft des in Ballenform gebrachten Pflanzenmaterials vorherzusagen, das erzeugt wird, indem das in der Ballenpresskammer vorhandene Pflanzenmaterial in Ballenform gebracht wird;
wobei:
die Ballenpressmaschine dazu ausgelegt ist, mehrere Teile von Pflanzenmaterial in Ballenform zu bringen, um das in Ballenform gebrachte Pflanzenmaterial zu bilden;
die Sensordaten einen Teil von Sensordaten für jeden Teil von Pflanzenmaterial umfassen; und
Verarbeiten der Sensordaten Verarbeiten jedes Teils von Sensordaten umfasst, um einen Wert für die Eigenschaft jedes Teils von Pflanzenmaterial vorherzusagen;
wobei das Verfahren ferner das Konstruieren eines 3D-Modells des in Ballenform gebrachten Pflanzenmaterials unter Verwendung der vorhergesagten Eigenschaft jedes Teils von Pflanzenmaterial umfasst, wobei das 3D-Modell das in Ballenform gebrachte Pflanzenmaterial und die Verteilung des Werts der Eigenschaft über das gesamte in Ballenform gebrachte Pflanzenmaterial repräsentiert.

2. Computerimplementiertes Verfahren nach Anspruch 1, wobei die Sensordaten Bilddaten umfassen.

3. Computerimplementiertes Verfahren nach Anspruch 2, wobei die Eigenschaft des in Ballenform gebrachten Pflanzenmaterials ein Verhältnis von Stängel zu Blättern in dem in Ballenform gebrachten Pflanzenmaterial umfasst.

4. Computerimplementiertes Verfahren nach einem der Ansprüche 1 bis 3, wobei die Sensordaten erhalten werden, bevor das in der Ballenpresskammer vorhandene Pflanzenmaterial in Ballenform gebracht wird.

5. Computerimplementiertes Verfahren nach einem der Ansprüche 1 bis 3, wobei die Sensordaten erhalten werden, nachdem das in der Ballenpresskammer vorhandene Pflanzenmaterial in Ballenform gebracht wurde.

6. Computerimplementiertes Verfahren nach einem der Ansprüche 1 bis 5, ferner umfassend Markieren des in Ballenform gebrachten Pflanzenmaterials mit einem ballenspezifischen Kennzeichen zum Identifizieren des Ballens.

7. Computerimplementiertes Verfahren nach Anspruch 6, ferner umfassend das Hochladen des einen oder der mehreren vorhergesagten Werte der Eigenschaft des in Ballenform gebrachten Pflanzenmaterials auf einen externen Server,
wobei das ballenspezifische Kennzeichen einen Ort des einen oder der mehreren hochgeladenen vorhergesagten Werte der Eigenschaft des in Ballenform gebrachten Pflanzenmaterials auf dem externen Server angibt.

8. Computerimplementiertes Verfahren nach einem der Ansprüche 6 oder 7, wobei das ballenspezifische Kennzeichen einen QR-Code umfasst.

9. Computerimplementiertes Verfahren nach einem der Ansprüche 1 bis 8, ferner umfassend Anzeigen des einen oder der mehreren vorhergesagten Werte der Eigenschaft.

10. Computerimplementiertes Verfahren nach einem der Ansprüche 1 bis 8, das ferner Folgendes umfasst:
Prüfen eines externen Aktualisierungsservers auf Aktualisierungen für den Maschinenlernalgorithmus; und
als Reaktion auf das Vorhandensein einer Aktualisierung für den Maschinenlernalgorithmus, Herunterladen der Aktualisierung von dem externen Server und Aktualisieren des Maschinenlernalgorithmus unter Verwendung der Aktualisierung.

11. Verarbeitungssystem zum Vorhersagen einer Eigenschaft von durch Ballenpressmaschinen in Ballenform gebrachtem Pflanzenmaterial, das dazu ausgelegt ist, in einer Ballenpresskammer vorhandenes Pflanzenmaterial in Ballenform zu bringen, wobei das Verarbeitungssystem ausgelegt ist zum:
Erhalten, von einem Sensor, der in der Ballenpresskammer positioniert ist, von Sensordaten, die sich als Reaktion auf eine Änderung der Eigenschaft von Pflanzenmaterial, das in der Ballenpresskammer vorhanden ist, ändern; und
Verarbeiten der Sensordaten unter Verwendung eines Maschinenlernalgorithmus, um einen oder mehrere Werte für eine Eigenschaft des in Ballenform gebrachten Pflanzenmaterials vorherzusagen, das erzeugt wird, indem das in der Ballenpresskammer vorhandene Pflanzenmaterial in Ballenform gebracht wird;
wobei:
die Ballenpressmaschine dazu ausgelegt ist, mehrere Teile von Pflanzenmaterial in Ballenform zu bringen, um das in Ballenform gebrachte Pflanzenmaterial zu bilden;
die Sensordaten einen Teil von Sensordaten für jeden Teil von Pflanzenmaterial umfassen; und
Verarbeiten der Sensordaten Verarbeiten jedes Teils von Sensordaten umfasst, um einen Wert für die Eigenschaft jedes Teils von Pflanzenmaterial vorherzusagen;
wobei das Verarbeitungssystem ferner dazu ausgelegt ist, ein 3D-Modell des in Ballenform gebrachten Pflanzenmaterials unter Verwendung der vorhergesagten Eigenschaft jedes Teils von Pflanzenmaterial zu konstruieren, wobei das 3D-Modell das in Ballenform gebrachte Pflanzenmaterial und die Verteilung des Werts der Eigenschaft über das gesamte in Ballenform gebrachte Pflanzenmaterial repräsentiert.

12. Ballenpresssystem, das Folgendes umfasst:
das Verarbeitungssystem nach Anspruch 11;
eine Ballenpressmaschine; und
einen Sensor, der in einer Ballenpresskammer der Ballenpressmaschine angeordnet ist.

## Revendications

1. Procédé mis en œuvre par ordinateur pour prédire une propriété de matière végétale mise en balle produite par une machinerie de mise en balle configurée pour mettre en balle une matière végétale présente dans une chambre de mise en balle, le procédé mis en œuvre par ordinateur comprenant :
l'obtention, en provenance d'un capteur positionné dans la chambre de mise en balle, de données de capteur qui changent en réponse à un changement de la propriété de matière végétale présente dans la chambre de mise en balle ; et
le traitement des données de capteur, en utilisant un algorithme d'apprentissage machine, pour prédire une ou plusieurs valeurs pour la propriété de la matière végétale mise en balle produite en mettant en balle la matière végétale présente dans la chambre de mise en balle ;
dans lequel :
la machinerie de mise en balle est configurée pour mettre en balle une pluralité de parties de matière végétale pour former la matière végétale mise en balle ;
les données de capteur comprennent une partie de données de capteur pour chaque partie de matière végétale ; et
le traitement des données de capteur comprend le traitement de chaque partie de données de capteur pour prédire une valeur pour la propriété de chaque partie de matière végétale ;
le procédé comprenant en outre la construction d'un modèle 3D de la matière végétale mise en balle en utilisant la propriété prédite de chaque partie de matière végétale, le modèle 3D représentant la matière végétale mise en balle et la distribution de la valeur de la propriété dans la totalité de la matière végétale mise en balle.

2. Procédé mis en œuvre par ordinateur de la revendication 1, dans lequel les données de capteur comprennent des données d'image.

3. Procédé mis en œuvre par ordinateur de la revendication 2, dans lequel la propriété de la matière végétale mise en balle comprend un rapport tige-feuilles dans la matière végétale mise en balle.

4. Procédé mis en œuvre par ordinateur de quelconques des revendications 1 à 3, dans lequel les données de capteur sont obtenues avant la mise en balle de la matière végétale présente dans la chambre de mise en balle.

5. Procédé mis en œuvre par ordinateur de quelconques des revendications 1 à 3, dans lequel les données de capteur sont obtenues après la mise en balle de la matière végétale présente dans la chambre de mise en balle.

6. Procédé mis en œuvre par ordinateur de quelconques des revendications 1 à 5, comprenant en outre l'étiquetage de la matière végétale mise en balle avec une étiquette spécifique de balle pour identifier la balle.

7. Procédé mis en œuvre par ordinateur de la revendication 6, comprenant en outre le téléchargement de l'une ou des plusieurs valeurs prédites de la propriété de la matière végétale mise en balle sur un serveur externe,
dans lequel l'étiquette spécifique de balle indique un emplacement de l'une ou des plusieurs valeurs prédites téléchargées de la propriété de la matière végétale mise en balle sur le serveur externe.

8. Procédé mis en œuvre par ordinateur de quelconques des revendications 6 ou 7, dans lequel l'étiquette spécifique de balle comprend un code QR.

9. Procédé mis en œuvre par ordinateur de quelconques des revendications 1 à 8, comprenant en outre l'affichage de l'une ou des plusieurs valeurs prédites de la propriété.

10. Procédé mis en œuvre par ordinateur de quelconques des revendications 1 à 8, comprenant en outre :
le contrôle d'un serveur de mise à jour externe en ce qui concerne de quelconques mises à jour pour l'algorithme d'apprentissage machine ; et
en réponse à la présence d'une mise à jour pour l'algorithme d'apprentissage machine, le téléchargement de la mise à jour, à partir du serveur externe, et la mise à jour de l'algorithme d'apprentissage machine en utilisant la mise à jour.

11. Système de traitement pour prédire une propriété de matière végétale mise en balle produite par une machinerie de mise en balle configurée pour mettre en balle matière végétale présente dans une chambre de mise en balle, le système de traitement étant configuré pour :
obtenir, en provenance d'un capteur positionné dans la chambre de mise en balle, des données de capteur qui changent en réponse à un changement de la propriété de matière végétale présente dans la chambre de mise en balle ; et
traiter les données de capteur, en utilisant un algorithme d'apprentissage machine, pour prédire une ou plusieurs valeurs pour une propriété de la matière végétale mise en balle produite en mettant en balle la matière végétale présente dans la chambre de mise en balle ;
dans lequel :
la machinerie de mise en balle est configurée pour mettre en balle une pluralité de parties de matière végétale pour former la matière végétale mise en balle ;
les données de capteur comprennent une partie de données de capteur pour chaque partie de matière végétale ; et
le traitement des données de capteur comprend le traitement de chaque partie de données de capteur pour prédire une valeur pour la propriété de chaque partie de matière végétale ;
le système de traitement étant en outre configuré pour construire un modèle 3D de la matière végétale mise en balle en utilisant la propriété prédite de chaque partie de matière végétale, le modèle 3D représentant la matière végétale mise en balle et la distribution de la valeur de la propriété dans la totalité de la matière végétale mise en balle.

12. Système de mise en balle, comprenant :
le système de traitement de la revendication 11 ;
une machinerie de mise en balle ; et
un capteur positionné dans une chambre de mise en balle de la machinerie de mise en balle.
